(19)

Europäisches Patentamt
European Patent Office
Office européen des brevets

(11) **EP 1 882 973 B1**

(12) **EUROPEAN PATENT SPECIFICATION**

(45) Date of publication and mention
of the grant of the patent:
**20.01.2021 Bulletin 2021/03**

(51) Int Cl.:
***G02C 7/02*** *(2006.01)*

(21) Application number: **07014487.8**

(22) Date of filing: **24.07.2007**

(54) **Design method for spectacle lens, spectacle lens, and spectacles**

Konstruktionsverfahren für ein Brillenglas, Brillenglas und Brille

Procédé de conception pour verre de lunettes, verre de lunettes, et lunettes

(84) Designated Contracting States:
**DE FR GB**

(30) Priority: **25.07.2006 JP 2006201673**

(43) Date of publication of application:
**30.01.2008 Bulletin 2008/05**

(73) Proprietor: **EHS Lens Philippines, Inc.
Cavite (PH)**

(72) Inventors:
• **Kamishita, Kaoru
Suwa-shi, Nagano-ken 392-8502 (JP)**

• **Ito, Ayumu
Suwa-shi, Nagano-ken 392-8502 (JP)**
• **Kaga, Tadashi
Suwa-shi, Nagano-ken 392-8502 (JP)**

(74) Representative: **Hoffmann Eitle
Patent- und Rechtsanwälte PartmbB
Arabellastraße 30
81925 München (DE)**

(56) References cited:
**EP-A- 1 582 909          US-A- 6 142 624
US-A1- 2002 118 337          US-A1- 2002 149 739
US-A1- 2005 122 470          US-A1- 2006 007 394**

**Description**

BACKGROUND

1. Technical Field

The present invention relates to a design method for a spectacle lens attached to a spectacle frame having a large bend angle such as wraparound-type frame, and to a spectacle lens and a pair of spectacles attached to a spectacle frame.

2. Related Art

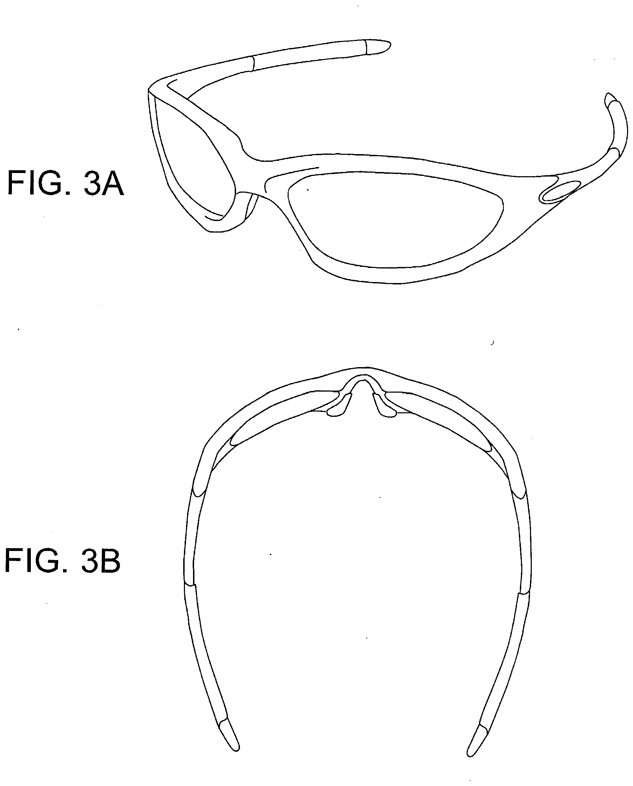

Recently, a wraparound-type spectacle frame chiefly for sport sunglass has been increasingly used. Figs. 3A and 3B are perspective views of an example of wraparound-type spectacle frame as viewed obliquely and from above, respectively. As illustrated in Figs. 3A and 3B, the wraparound-type spectacle frame having a large bend angle is curved along the shape of the wearer's face. Thus, lenses attached to the wraparound frame reach the sides of the face, and provide wide vision. For this reason the wraparound-type spectacle frame is used for spectacles such as protection spectacles for sports and eyeball protection spectacles to be worn by athletes.

With rise in the number of the athletes wearing wraparound-type spectacle frames, ordinary people wearing the wraparound-type frame are also increasing. Thus, an increasing number of people who need correcting glasses desire to use the wraparound-type spectacle frame.

In order to meet this demand, JP-A-2005-284059 discloses an optical design method appropriate for a spectacle frame having a large bend angle such as a wraparound-type frame.

However, the above reference discloses only correction of the effects of the bend angle and the inclination angle. This technique does not clarify the method for adding astigmatism correcting characteristics to the frame, though people who need astigmatism correction also desire to use the wraparound-type spectacle frame.

EP 1 582 909 A1 relates to a spectacle lens that is designed optically to suit a spectacle frame with a large camber angle such as a wraparound type spectacle frame. A spectacle lens that is mounted in a spectacle frame with a camber angle of 200° or more, in which cylindrical power for offsetting astigmatic aberration, which is caused by the camber angle at a design reference point, is added to a refractive surface on an object side or a refractive surface on an eye side, prismatic power for offsetting prismatic effect, which is caused by the camber angle at the design reference point is added to the refractive surface on the object side or the refractive surface on the eye side and aspherical surfaces different from each other on a nose side and an ear side are formed on the refractive surface on the object side or the refractive surface on the eye side. US 2006/0007394 A1 discloses a method of designing a spectacle lens having a front surface and a back surface. At least one of the front and back surfaces is formed as a rotationally asymmetrical aspherical surface. The method includes the steps of selecting a plurality of cross-sections of the spectacle lens respectively defined in a plurality of planes each of which includes a reference axis passing through the front and back surfaces at a point substantially equal to a center of an outer diameter of the spectacle lens, each of the plurality of cross-sections having one side coinciding with the reference axis, designing each of shapes of the plurality of cross-sections so that predetermined optical performance is optimized for each of the shapes of the plurality of cross-sections,; and interpolating a characteristic amount regarding intermediate points on the rotationally asymmetrical aspherical surface between the shapes of the plurality of cross-sections using a characteristic amount of each of the shapes of the plurality of cross-sections.

SUMMARY

Accordingly, it is an advantage of some aspects of the invention to provide a design method for a spectacle lens capable of not only correcting effects of bend angle and inclination angle but also providing astigmatism correcting characteristics for a spectacle lens mounted in a spectacle frame having a large bend angle.

It is an advantage of some aspects of the disclosure to provide a spectacle lens mounted in a spectacle frame having a large bend angle, and spectacles mounted in a spectacle frame having a large bend angle.

A design method for a spectacle lens mounted in a spectacle frame having a bend angle of 200 degrees or larger is provided as defined in claim 1. According to a first aspect of the invention the method includes a first step of establishing an arbitrary design reference point on a refractive surface of the spectacle lens, an astigmatic power adding step on an object side refractive surface or an eyeball side refractive surface of the spectacle lens that adds astigmatic power to the entire refractive surface for canceling aberration produced by the bend angle of the spectacle frame on the object side refractive surface or the eyeball side refractive surface, at the design reference point of the spectacle lens, and a step of setting prismatic power by tilting the surface, which is on the object side or on the eyeball side of the spectacle lens, to the entire refractive surface so as to cancel prismatic power produced by the bend angle of the spectacle frame on the object side refractive surface or the eyeball side refractive surface at the design reference point of the spectacle lens. On the assumptions that: a line extending from the design reference point to the edge of the spectacle lens in one direction is a first reference meridian, the direction being a projection direction, when a surface normal line at the design reference point of the spectacle lens is projected on a flat plane crossing the visual axis at right angles, the lens having the bend angle of the spectacle frame; a line extending from the design reference point to the edge of the spectacle lens in the direction opposite to the direction of the first reference meridian is a second reference meridian; a line crossing the first reference meridian at right angles at the design reference point and extending from the design reference point to the edge of the spectacle lens in one direction is a third reference meridian; and a line extending from the design reference point to the edge of the spectacle lens in the direction opposite to the direction of the third reference meridian is a fourth reference meridian, the design method for a spectacle lens further includes a first step that sets a plurality of reference meridians including at least the first through fourth reference meridians, a second step that obtains the differences between the visual axis direction and a reference spherical surface which includes the design reference point and the lens outside edge from aspherical surface coefficients, wherein the aspherical surface coefficients are obtained from aspherical surface terms from the aspherical surface equation by providing optimized optical performance on the respective reference meridians after the first step, and a third step that obtains aspherical surface quantities between the reference meridians by interpolation after the second step, wherein the aspherical surface coefficients for the respective degrees are plotted for the respective angles of the reference meridians and a curved line smoothly connecting these aspherical surface coefficients is obtained, wherein the aspherical surface coefficients for the respective degrees at an arbitrary angle are obtained from the curved line so as to obtain the aspherical surface terms, wherein the design method further comprises: an astigmatic power adding step on the object side refractive surface or eyeball side refractive surface of the spectacle lens that adds astigmatic power for canceling aberration caused by a pantoscopic angle of the spectacle frame at the design reference point of the spectacle lens; and a step of setting prismatic power by tilting the surface, which is on the object side or on the eyeball side to the entire refractive surface so as to cancel prismatic power produced by the pantoscopic angle on the object side refractive surface or the eyeball side refractive surface at the design reference point of the spectacle lens, wherein: a line extending from the design reference point to the edge of the spectacle lens in one direction is a first reference meridian, wherein the direction is a projected direction in which a normal line at the design reference point of the spectacle lens is projected on a flat plane crossing the visual axis at right angles while the lens is arranged at the bend angle and the pantoscopic angle of the spectacle frame.

According to the design method for the spectacle lens in the first aspect of the invention, astigmatic power and prismatic power are added to the entire refractive surface on the object side or the eyeball side so as to cancel effects caused by the bend angle at an arbitrary design reference point. The effect of the bend angle cannot be corrected only by adding the astigmatic power and prismatic power in areas other than the design reference point. The design method for the spectacle lens according to the first aspect of the invention therefore includes the first through third steps for obtaining aspherical surface quantities to be added to correct the effect caused by the bend angle for the entire area of the spectacle lens. More specifically, directions where the variation of the inclination becomes the maximum and the minimum according to the bend angle are established as reference meridians. Then, aspherical surface quantities providing optimized optical performance on the reference meridians are calculated, and aspherical surface quantities between the reference meridians are obtained by interpolation.

In the design method for the spectacle lens in the first aspect of the invention, when the spectacle lens is an astigmatic power lens, on the assumptions that: a line extending from the design reference point of the spectacle lens to the outside edge of the spectacle lens in one direction along the cylinder axis is a first astigmatic reference meridian; a line extending from the design reference point to the edge of the spectacle lens in the direction opposite to the direction of the first astigmatic reference meridian is a second astigmatic reference meridian; a line crossing the first astigmatic reference meridian at right angles at the design reference point and extending from the design reference point to the edge of the spectacle lens in one direction is a third astigmatic reference meridian; and a line extending from the design reference point to the edge of the spectacle lens in the direction opposite to the direction of the third astigmatic reference meridian is a fourth astigmatic reference meridian, it is preferable that a first step that sets a plurality of reference meridians including at least the first through fourth reference meridians and the first through fourth astigmatic reference meridians is included.

In this design method which establishes reference meridians, when astigmatic power for correcting astigmatism is added, the effect caused by the variation of target dioptric power in accordance with the angles of the meridians can be corrected simultaneously with correction of the effect of the bend angle only by adding astigmatic reference meridians indicating the direction of the cylinder axis to the reference meridians.

In the design method for the spectacle lens according to the first aspect of the invention, it is preferable that an astigmatic power adding step on the object side refractive surface or eyeball side refractive surface of the spectacle lens that adds astigmatic power for canceling aberration caused by an pantoscopic angle of the spectacle frame at the design reference point of the spectacle lens, and a step setting prismatic power by tilting the surface, which is on the object side or on the eyeball side of the spectacle lens for canceling prismatic power, caused by the pantoscopic angle of the spectacle frame at the design reference point of the spectacle lens are included, and that a line extending from the design reference point to the edge of the spectacle lens in one direction is a first reference meridian, the direction being a projection direction, when a normal line at the design reference point of the spectacle lens is projected on a flat plane crossing the visual axis at right angles, the lens having the bend angle and the pantoscopic angle of the spectacle frame.

When the spectacle frame has a pantoscopic angle which causes effect larger than the ignorable level, astigmatic power and prismatic power are added to the entire refractive surface so as to cancel the effect caused by the pantoscopic angle at the design reference point. In addition, the effect of the bend angle and the effect of the pantoscopic angle can be simultaneously corrected by taking into account the bend angle and the pantoscopic angle in establishing the first reference meridian such that the aspherical surface quantities for correcting the effect of the pantoscopic angle are included.

A spectacle lens provided according to an aspect of the disclosure is manufactured by the design method for the spectacle lens according to the first aspect of the invention.

A spectacle lens provided according to another aspect of the disclosure is mounted in a spectacle frame having a bend angle of 200 degrees or larger and is provided with an astigmatic power lens.

A pair of spectacles (or: eyeglasses) provided according to another aspect of the disclosure has spectacle lenses being astigmatic power lenses and the spectacle frame has a bend angle of 200 degrees or larger.

According to the lens in these aspects of the disclosure, prismatic power and aberration caused by the bend angle and producing astigmatic power are canceled, and therefore clear vision including no blur can be obtained.

BRIEF DESCRIPTION OF THE DRAWINGS

The invention will be described with reference to the accompanying drawings, wherein like numbers refer to like elements.

Figs. 1A and 1B schematically illustrate general ideas for setting reference meridians.

Figs. 2A through 2C schematically illustrate reference meridians.

Figs. 3A and 3B illustrate a wraparound-type spectacle frame. Fig. 3A is a perspective view as viewed in an oblique direction, and Fig. 3B is a perspective view as viewed from above.

Figs. 4A and 4B illustrate general ideas of a bend angle and an inclination angle, respectively.

Fig. 5 shows visual aberrations, visual average dioptric power distributions, and visual aberrations without prescribed astigmatism for lenses No. 1 through No. 4 in an embodiment.

Fig. 6 shows visual aberrations, visual average dioptric power distributions, and visual aberrations without prescribed astigmatism for lenses No. 5 through No. 8 in another embodiment.

DESCRIPTION OF EXEMPLARY EMBODIMENTS

A design method for a spectacle lens, a spectacle lens, and spectacles in embodiments according to the invention will be hereinafter described. The invention is not limited to these embodiments.

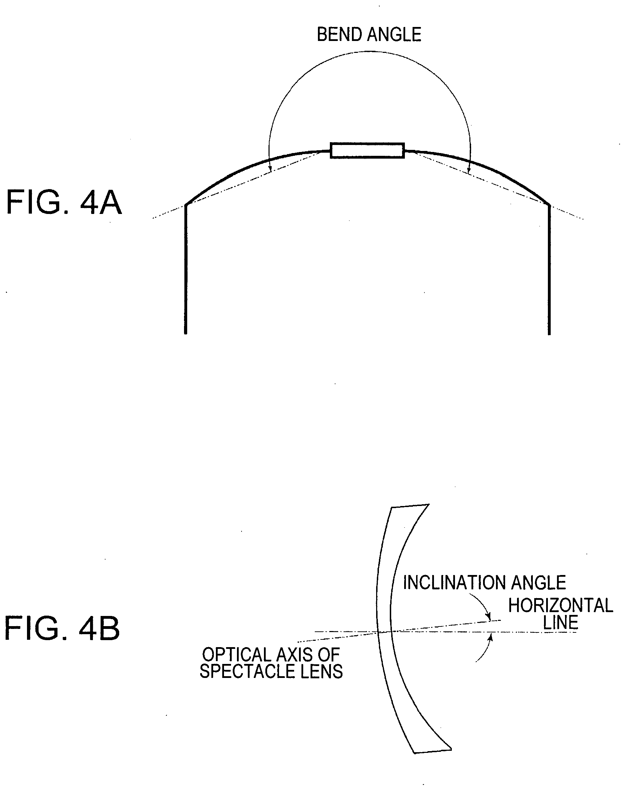

A design method of a spectacle lens according to an embodiment of the invention is a method for designing a spectacle lens which provides optimized optical properties (or: characteristics) when the spectacle lens is mounted in a wraparound-type spectacle frame having a large bend angle as illustrated in Figs. 3A and 3B. The bend angle of the spectacle frame refers to an angle formed by left and right rim surfaces as illustrated in Fig. 4A, and produces inside bend condition when the bend angle is smaller than 180 degrees, and outside bend condition when the bend angle is larger than 180 degrees. The spectacle lens design method according to the embodiments of the invention designs a spectacle lens having optical properties suitable for a spectacle frame in the outside bend condition having a bend angle of 200 degrees or larger. The bend angles of wraparound-type spectacle frames available on the market lie in the range from about 200 to about 250 degrees. A spectacle frame having a bend angle of 200 degrees or larger is used for a wraparound-type spectacle frame as shown in Figs. 3A and 3B, water goggles, protection glasses, or the like.

The spectacle frame having an angle of 200 degrees or larger is curved along the shape of the wearer's face. Thus, the spectacle lens is fixed in such a position as to be inclined with respect to the vision. The spectacle lens mounted in the spectacle frame having a bend angle of 200 degrees or larger needs to have a larger curvature than that of an ordinary spectacle lens. The curvature of the object side refractive surface is generally 5 dioptres or larger when expressed in power, and typically in the range from 6 to 12 dioptres.

The object side refractive surface and the eyeball side refractive surface of the ordinary spectacle lens are designed assuming that the lens is mounted in a spectacle frame having a bend angle of 180 degrees, that is, having no bent. For eye examination, e.g. at an eye specialist or optician, a specific spectacle frame for eye examination having no bent is used. When a spectacle lens having optical properties appropriate for the spectacle frame having no bent is fixed in such a position as to be inclined with respect to the vision, a problem arises in view of the optical properties.

When a spectacle lens is attached to a spectacle frame having a large bend angle in such a condition as to be inclined with respect to the vision, the power in the left-right direction is changed with the power in the up-down direction kept substantially unchanged. In this case, aberration is caused and astigmatic effect is given to the spherical surface lens. In addition, when the spectacle lens is inclined with respect to the vision, prismatic power is produced.

Thus, when the spectacle lens appropriate for the spectacle frame having a bend angle of 180 degrees is attached to a spectacle frame having a bend angle of 200 degrees or larger, at least the prismatic power and the aberration caused by the bend angle and producing astigmatic power are present on the spectacle lens. Thus, blurred images are viewed through the spectacle lens.

The design method shown in JP-2005-284059 can solve this problem. The spectacle lens design method according to the embodiment of the invention, however, is an improvement over the design method disclosed in this reference and adds astigmatism correcting characteristics to the technique of the reference. The design method according to the embodiment of the invention is now discussed in conjunction with the design method shown in JP-2005-284059.

According to the spectacle lens design method of an embodiment of the invention, an arbitrary design reference point is established on a refractive surface in a first step, and astigmatic power is added to the entire refractive surface so as to cancel astigmatic power produced by a bend angle on the object side refractive surface or the eyeball side refractive surface at the design reference point in a second step (astigmatic power adding step). In a third step, prismatic power is set, by tilting the surface, which is on the object side or on the eyeball side, to the entire refractive surface so as to cancel prismatic power produced by the bend angle on the object side refractive surface or the eyeball side refractive surface at the design reference point (step of setting prismatic power). In a fourth step, astigmatic power for correcting astigmatism is added to the object side refractive surface or the eyeball side refractive surface in case of correction of astigmatism. In a fifth step, an aspherical surface quantity for simultaneously correcting effects of the bend angle, dioptric power, and astigmatism dioptric power is added to the entire object side refractive surface or the entire eyeball side refractive surface including the design reference point so as to correct aberration of the entire spectacle lens. The order of these steps may be switched. Only either the second step or the third step may be performed instead of conducting both of these steps.

When the spectacle lens attached to the spectacle frame has an inclination angle, a step for adding astigmatic power to the entire refractive surface to cancel astigmatic power produced by a pantoscopic (inclination) angle at the design reference point (astigmatic power adding step) and a step for setting prismatic power to the entire refractive surface to cancel prismatic power produced by the inclination angle at the design reference point (step adding prismatic power) are given between the third step and the fourth step as well as the correction for the aberration caused by the bend angle. It is possible to eliminate the aberration correction at the design reference point since the pantoscopic angle is generally small.

The design reference point may be arbitrarily determined, but generally a distance visual point is selected as the design reference point. The distance visual point is a cross point of the visual axis and the lens. The visual axis corresponds to the vision of the eyes located at a first eye position as a relative position with respect to the head under the condition where the eyes are viewing an object located straightly before the eyes at the same level as that of the eyes.

The aberration and prismatic power produced by the bend angle and inclination angle vary according to the bend angle, pantoscopic angle, and the dioptric power of the spectacle lens fixed to the spectacle frame. It is thus necessary to correct the aberration caused by the bend angle, pantoscopic angle, and dioptric power at the design reference point.

The refractive surface to which astigmatic power is added so as to cancel astigmatic power produced by the bend angle and pantoscopic angle may be either the refractive surface on the object side or the refractive surface on the eyeball side. In this case, the axis of the added toric surface having the maximum power extends in the direction corresponding to the axis established when inclining the spectacle lens. In case of the bend angle, this axis coincides with a vertical line passing the design reference point. In case of the pantoscopic angle, the axis coincides with a horizontal axis passing the design reference point.

The refractive surface to which prismatic power is added so as to cancel prismatic power produced by the bend angle and pantoscopic angle may be either the refractive surface on the object side or the refractive surface on the eyeball side. The added prismatic power is inclined with its center located at the reference point such that the nose side is located at the base position in case of the bend angle, and such that the upper side is located at the base position in case of the pantoscopic angle.

It is possible to add astigmatic power to the object side refractive surface and prismatic power to the eyeball side refractive surface, or add these powers to the opposite side refractive surfaces. Alternatively, it is possible to add both astigmatic power and prismatic power to the eyeball side refractive surface so as to provide a refractive surface having the combination of these powers.

However, the entire spectacle lens cannot be completely corrected by correction of astigmatism and prism produced by the bend angle and pantoscopic angle at the design reference point, since the spectacle lens inclined in the left-right direction and up-down direction with respect to the vision has asymmetrical pantoscopic angles in the left-right direction and the up-down direction at the design reference point with respect to the vision.

The aspherical surface quantity for optimizing correction for the effect of the asymmetrical pantoscopic angles in the left-right direction and up-down direction at the design reference point with respect to the vision also varies according to the target dioptric power of the spectacle lens. Since the target dioptric power of the lens having astigmatic correcting characteristics varies according to the angles of meridians, it is necessary to consider the effect of variations of the target dioptric power according to the angles of meridians so as to obtain the optimized optical performance.

Thus, in the spectacle lens design method according to the embodiment of the invention, the aspherical surface quantity for optimizing the optical characteristics by simultaneously correcting the effect of the bend angle, pantoscopic (inclination) angle, dioptric power, and astigmatism dioptric power for the entire object side refractive surface or the entire eyeball side refractive surface including the design reference point is calculated by the following first through third steps.

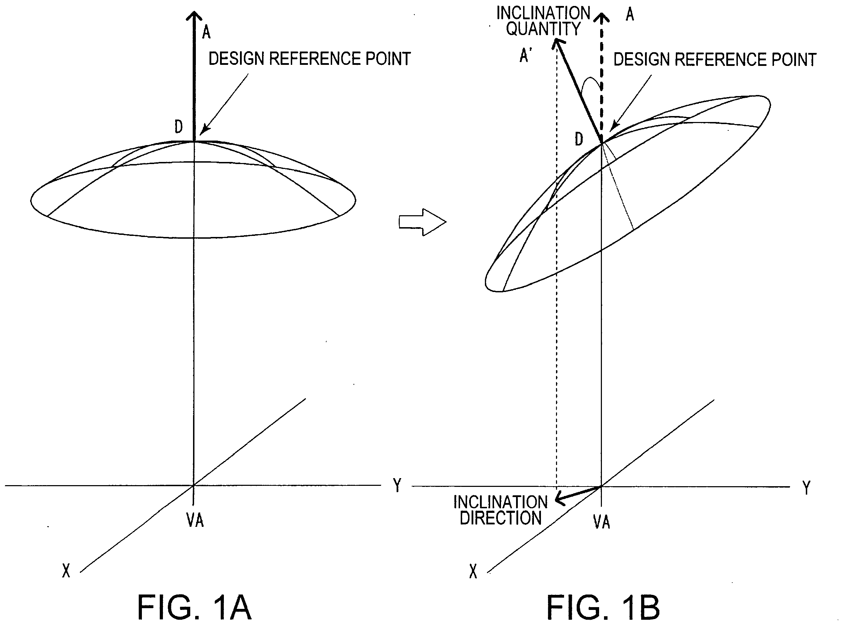

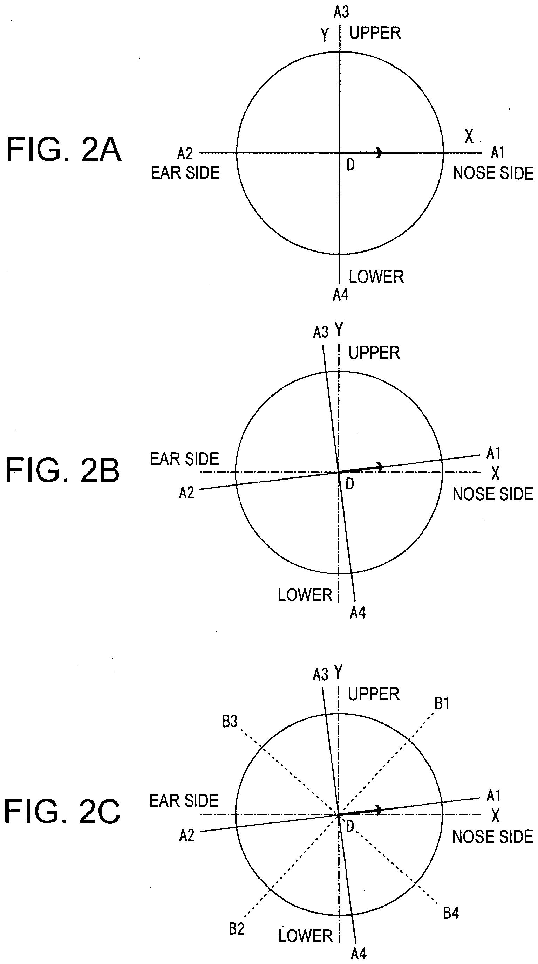

In the first step for calculating the aspherical surface quantity, a plurality of reference meridians is established. The method for establishing the reference meridians is now explained with reference to Figs. 1A and 1B and Figs. 2A through 2C. In a preceding step, a design reference point D has been already established either on the object side refractive surface (outside surface) or on the eyeball side refractive surface (inside surface). The design reference point determined in the preceding step may be used as the design reference point D for the step of calculating the aspherical surface quantity.

Figs. 1A and 1B schematically show the general idea for setting the reference meridians. A visual axis VA is the vision of the eyes located at the first eye position as the relative position with respect to the head under the condition where the eyes are viewing the object located straightly before the eyes at the same level as that of the eyes. Fig. 1A shows the condition in which the normal line (arrow A) at the design reference point D corresponds to the visual axis VA assuming that the optical surface on which the design reference point D is established is a spherical surface. In this case, the spectacle lens is disposed in such a condition as to be attached to a spectacle frame having the bend angle of 180 degrees with no inclination angle.

When the spectacle lens is attached to a spectacle frame having a large bend angle and a certain inclination angle, the normal line (arrow A') at the design reference point D of the spectacle lens is inclined with respect to the visual axis VA by a predetermined inclination quantity (inclination angle) in a predetermined inclination direction from the original arrow A according to the bend angle and inclination angle as illustrated in Fig. 1B. When the inclination angle is none or an ignorable value, the inclination direction of the normal line at the design reference point D is the horizontal direction. Fig. 1B shows an example in which the design reference point D is set on the outside surface of the spectacle lens for the left eye, and the direction of the arrow is reversed from the direction in Fig. 1B when the design reference point D is set on the inside surface. The inclination direction is opposite between the lenses for the right eye and the left eye.

Figs. 2A through 2C schematically show the reference meridians. The reference meridians shown in Fig. 2A are reference meridians when no inclination angle is given. When only the bend angle is present, the inclination direction of the normal line of the spectacle lens for either the right eye or the left eye at the design reference point D extends in the horizontal direction (X axis) from the design reference point D toward the nose side edge as indicated by an arrow under the condition where the design reference point D is set on the inside surface. A line extending from the design reference point D to the lens edge in this inclination direction is determined as a first reference meridian A1. A line extending from the design reference point D to the ear side edge in the direction opposite to that of the first reference meridian A1 is determined as a second reference meridian A2. A line crossing the first reference meridian A1 at the design reference point D at right angles and extending from the design reference point D to the upper lens edge is determined as a third reference meridian A3. A line extending from the design reference point D to the lower edge in the direction opposite to that of the third reference meridian A3 is determined as a fourth reference meridian A4. The cross-shaped first through fourth reference meridians A1 through A4 indicate the directions where the effect of the bend angle becomes the maximum and the minimum. The first through fourth reference meridians A1 through A4 shown in Fig. 2A correspond to the vertical and horizontal directions.

Reference meridians shown in Fig. 2B are those when the inclination angle is given as well as the bend angle. As can be seen from this figure, the directions of the first through fourth reference meridians A1 through A4 indicated by arrows are slightly inclined from the vertical and horizontal directions by adding the inclination angle.

Fig. 2C shows an example of reference meridians established not only for correcting the effects of the bend angle and inclination angle but also for correcting prescribed astigmatism, for example, for adding a toric surface. In this case, as well as the first through fourth reference meridians A1 through A4, the following lines are established. A line extending from the design reference point D to the edge on one side along the astigmatic axis passing the design reference point D is determined as a first astigmatic reference meridian B1. A line extending from the design reference point D to the lens edge in the direction opposite to that of the first astigmatic reference meridian B1 is determined as a second astigmatic reference meridian B2. A line crossing the first astigmatic reference meridian B1 at the design reference point at right angles and extending to the lens edge on one side is determined as a third astigmatic reference meridian B3. A line extending to the edge in the direction opposite to that of the third astigmatic reference meridian B3 is determined as a fourth astigmatic reference meridian B4. The first through fourth astigmatic reference meridians B1 through B4 correspond to chief meridians of an astigmatic power lens.

According to the invention, at least the four meridians of the first through the fourth reference meridians A1 through A4 are used when astigmatism is not corrected. On the other hand, at least the first through fourth astigmatic reference meridians B1 through B4 as well as the first through fourth reference meridians A1 through A4, i.e., eight meridians are used when astigmatism is corrected. However, when the first through fourth astigmatic reference meridians B1 through B4 coincide with the first through fourth reference meridians A1 through A4, the first through fourth reference meridians A1 through A4 are established as reference meridians.

It is possible to arbitrarily use additional reference meridians between any meridians of the first through fourth reference meridians A1 through A4 and the first through fourth astigmatic reference meridians B1 through B4 so as to enhance the interpolation accuracy.

In the step of calculating the aspherical surface quantity according to the spectacle lens design method of the embodiment of the invention, after establishment of the reference meridians in a first step, the aspherical surface quantity providing optimized optical properties on each reference meridian is calculated for each reference meridian in a second step. The aspherical surface quantity in this case refers to the difference between the visual axis (z axis) direction and a reference spherical surface which includes the design reference point D and the lens outside edge. More specifically, light tracing method is employed for each reference meridian, for example, and a coefficient in the following aspherical surface equation providing a z-axis direction coordinate on each reference meridian is calculated, for example, so as to correct the effect of the bend angle, pantoscopic angle, dioptric power, astigmatism dioptric power for astigmatism correction and provide optimized optical properties:

$$z = \frac{cr^2}{1 + \sqrt{1 - (1+k)c^2 r^2}} + \sum_{i=1} A_i r^i$$

where: z is the z-direction coordinate on the curved surface; r is the distance from the optical axis in the direction crossing the optical axis at right angles; c is a curvature at the vertex; and k and Ai are aspherical surface coefficients. The second and subsequent terms in the aspherical surface equation are aspherical surface terms, and the degree of the aspherical surface, that is, the aspherical surface quantity is calculated from the coefficient Ai.

According to the spectacle lens design method of the embodiment of the invention, after calculation of the aspherical surface quantities on the reference meridians in the second step, the aspherical surface quantities between the reference meridians are calculated by interpolation so as to obtain the aspherical surface quantity at each point of the entire refractive surface as the aspherical surface. The optical properties of the lens entire surface can be appropriately corrected by adding the calculated aspherical surface quantities to the surface shape of the refractive surface as the aspherical surface. For interpolation, the following method can be employed, for example. The aspherical surface coefficients Ai for the respective degrees are plotted for the respective angles of the reference meridians, and a curved line smoothly connecting these aspherical surface coefficients is obtained. Then, the aspherical surface coefficients for the respective degrees at an arbitrary angle are calculated from the curved line so as to obtain the aspherical surface terms.

The inclination direction of the normal line at the design reference point determined by the bend angle and pantoscopic angle and the direction crossing the inclination direction at right angles are established as the reference meridians for the following reason. These directions are directions where the variation of the inclination produced by the bend angle and pantoscopic angle becomes the maximum and the minimum, and therefore these directions correspond to directions where the aberration caused by the inclination and dioptric power deviation from the target dioptric power becomes the maximum and the aberration caused by the inclination and dioptric power deviation from the target dioptric power becomes the minimum. Thus, the accuracy in interpolation enhances when these directions are established as the reference meridians. When the pantoscopic angle is none or an ignorable value, for example, vertical line passing the design reference point D coincides with the third reference meridian A3 and the fourth reference meridian A4. In this case, these meridians receive the smallest effect of the bend angle.

The cylinder axis (astigmatic axis) is established as the reference meridian for the following reason. The cylinder axis and the direction crossing the cylinder axis at right angles indicate directions of the maximum power and the minimum power, and therefore the accuracy in interpolation enhances when these directions are established as the reference meridians.

Astigmatic power is added to the front surface or rear surface to correct the dioptric power deviation of the lens at the design reference point caused by the bend angle and inclination angle. However, when astigmatic power for prescribed astigmatism correction and astigmatic power for correction of the effect are combined, it is possible that the cylinder axis after correction and the cylinder axis before correction do not agree with each other. In this case, the reference meridians in the cylinder axis direction and in the direction crossing the cylinder axis at right angles in all the reference meridians may be either the cylinder axis before correction or the cylinder axis after correction.

According to the spectacle lens design method of the embodiment of the invention, the optical characteristics of the spectacle lens attached to the wraparound-type spectacle frame having a large bend angle can be optimized. Particularly, in case of addition of astigmatism correction characteristics, the added aspherical surface quantities for correcting the effect caused by variation of the target dioptric power according to the angles of the meridians due to astigmatism prescription can be calculated simultaneously with the added aspherical surface quantities for correcting the effect of the bend angle and inclination angle. Thus, by using this method, it has become possible for the first time to add astigmatic correction characteristics to the spectacle lens attached to the wraparound-type spectacle frame having a bend angle larger than 200 degrees.

The development of spectacles having spectacle lenses provided with astigmatism correction characteristics and attached to the wraparound-type spectacle frame having a bend angle larger than 200 degrees is useful for those who need astigmatism correction and desire to use the wraparound-type spectacle frame.

Embodiments

A right-eye lens which has a spherical surface having power of 8.00D (dioptres) on the object side refractive surface (front surface), astigmatic surface having power of 11.04D in the direction of 45 degrees and power of 13.04D in the direction of 135 degrees on the eyeball side refractive surface (rear surface) as viewed from the front surface, spherical power of 3.00D, astigmatic power of 2.00D, astigmatic axis of 45 degrees, central thickness of 1.1mm, and material refractive index of 1.662 is used as a basic lens.

Embodiment 1

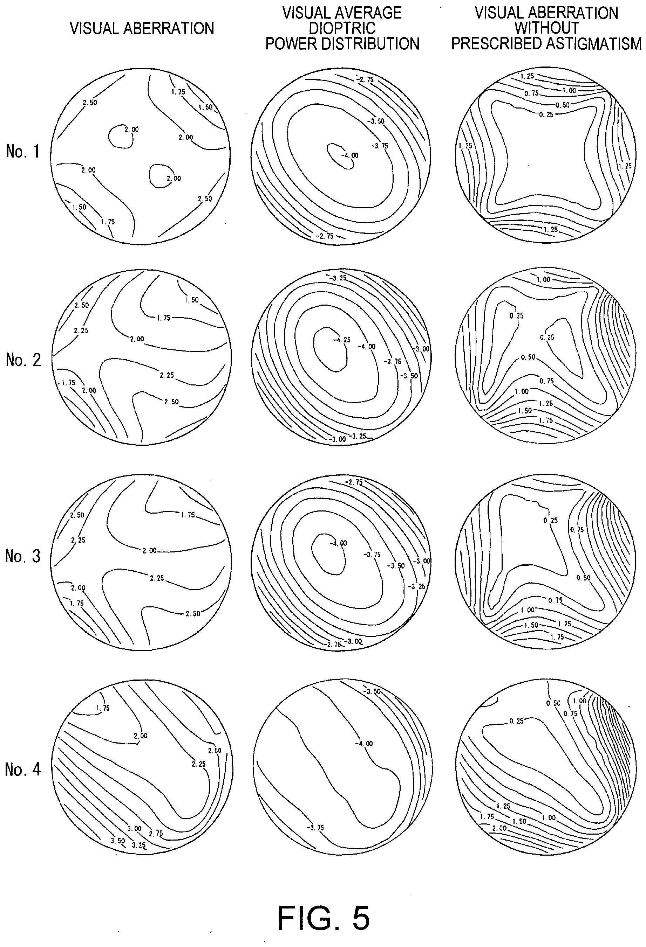

Fig. 5 shows visual aberrations, visual average dioptric power distributions, and visual aberrations without prescribed astigmatism obtained by removing prescribed astigmatism dioptric power from the visual aberrations for the following lenses No. 1 through No. 4. The results in the figure are all viewed from the lens rear surface side, and the geometric centers of the results correspond to the design reference point. The contour interval is 0.25 dioptre.

The lens No. 1 is a basic lens attached to a frame having a bend angle of 180 degrees and an inclination angle of zero degree.

The lens No. 2 is a basic lens inclined with its center located at the distance visual point on the rear surface and attached to a frame having a bend angle of 212 degrees and an inclination angle of zero degree. The distance visual point on the rear surface corresponds to the design reference point.

The lens No. 3 is a lens after correction of the effect of the bend angle at the design reference point of the lens No. 2. The rear surface is an astigmatic surface having power of 10.81D in the direction of 41.15 degrees and power of 12.83D in the direction of 131.15 degrees as viewed from the front surface. Simultaneously, the rear surface is inclined by 0.128 degree (prismatic power: 0.157 prism dioptre) in the horizontal direction with its center located at the design reference point such that the nose side is disposed at the base position for prismatic correction.

The lens No. 4 is a lens designed by the design method according to the embodiment of the invention, which is obtained by adding aspherical surface component for simultaneously correcting the effect of the bend angle and the effect of the astigmatism dioptric power to the rear surface of the lens No. 3. The distance visual point on the rear surface corresponds to the design reference point. The reference meridians used are eight meridians of zero degree (first reference meridian), 45 degrees (first astigmatic reference meridian), 90 degrees (third reference meridian), 135 degrees (third astigmatic reference meridian), 180 degrees (second reference meridian), 225 degrees (second astigmatic reference meridian), 270 degrees (fourth reference meridian), and 315 degrees (fourth astigmatic reference meridian) as viewed from the front surface side.

Embodiment 2

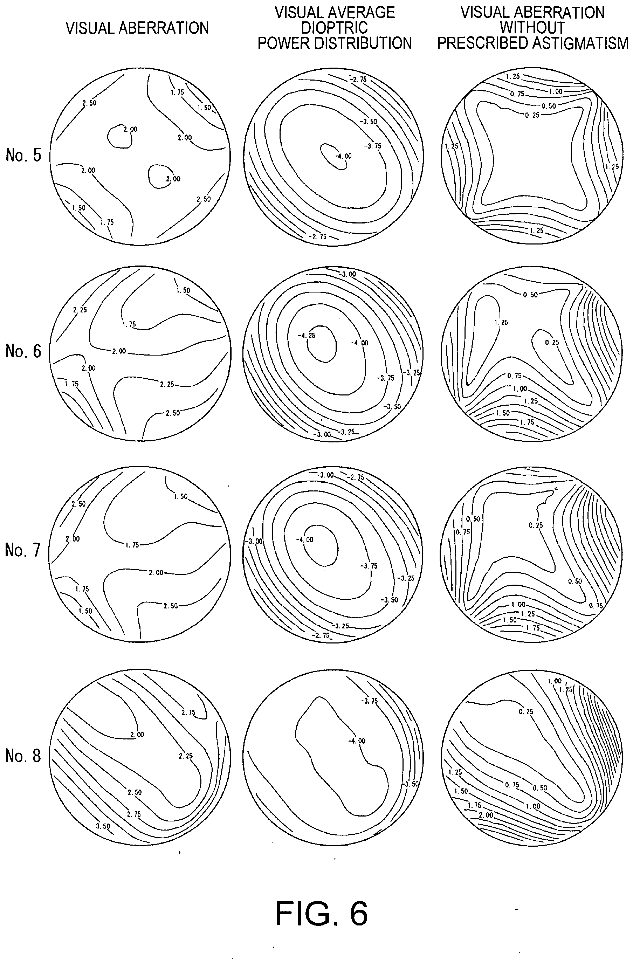

Fig. 6 shows visual aberrations, visual average dioptric power distributions, and visual aberrations without prescribed astigmatism obtained by removing prescribed astigmatism dioptric power from the visual aberrations for the following lenses No. 5 through No. 8. The results in the figure are all viewed from the lens rear surface side, and the geometric centers of the results correspond to the design reference point. The contour interval is 0.25 dioptre.

The lens No. 5 is a basic lens attached to a frame having a bend angle of 180 degrees and an inclination angle of zero degree (the same as lens No. 1) .

The lens No. 6 is a basic lens inclined with its center located at the distance visual point on the rear surface and attached to a frame having a bend angle of 210.91 degrees and an inclination angle of 4.14 degrees (inclination direction: 345 degrees, inclination angle: 16 degrees). The distance visual point on the rear surface corresponds to the design reference point.

The lens No. 7 is a lens after correction of the effect of the inclination angle at the design reference point of the lens No. 6. The rear surface is an astigmatic surface having power of 10.78D in the direction of 42.48 degrees and power of 12.89D in the direction of 132.48 degrees as viewed from the front surface. Simultaneously, the rear surface is inclined by 0.128 degree (prismatic power : 0.157 prism dioptre) with its center located at the design reference point such that the side opposite to the inclination direction (165 degrees as viewed from the front surface) corresponds to the base position for prismatic correction.

The lens No. 8 is a lens designed by the design method according to the embodiment of the invention, which is obtained by adding aspherical surface component for simultaneously correcting the effect of the bend angle and inclination angle and the effect of the astigmatism dioptric power to the rear surface of the lens No. 7. The reference meridians used are twelve meridians of 15 degrees and 45 degrees (astigmatic axis direction), 75 degrees (direction crossing inclination direction at right angles), 105 degrees and 135 degrees (direction crossing astigmatic axis at right angles), 165 degrees (inclination direction), 195 degrees and 225 degrees (astigmatic axis direction), 255 degrees (direction crossing inclination direction at right angles), 285 degrees and 315 degrees (direction crossing astigmatic axis at right angles), and 345 degrees (inclination angle) as viewed from the front surface side.

The advantages of the embodiment of the invention are apparent from comparison between the lenses No. 3 and No. 4 and comparison between the lenses No. 7 and No. 8 in the embodiment. According to the lenses No. 3 and No. 7, the visual average dioptric power greatly varies from the center to the outer circumference, and thus correction is insufficient on the lens outer circumference. According to the lenses No. 4 and No. 8 obtained by the method of the embodiment of the invention, the visual average dioptric power is substantially uniform throughout the lens surface. Thus, the lenses obtained by the method of the embodiment of the invention can solve the problem of deviation from the prescribed dioptric power.

The spectacle lens design method according to the embodiment of the invention is applicable to manufacture of a spectacle lens capable of appropriately correcting vision of a wearer of the spectacle lens when the spectacle lens is attached to a wraparound-type spectacle frame having a large bend angle.

**Claims**

1. A design method for a spectacle lens mounted in a spectacle frame having a bend angle of 200 degrees or larger, comprising:

   a first step of establishing an arbitrary design reference point (D) on a refractive surface of the spectacle lens;
   an astigmatic power adding step on an object side refractive surface or an eyeball side refractive surface of the spectacle lens that adds astigmatic power to the entire refractive surface for canceling aberration produced by the bend angle on the object side refractive surface or the eyeball side refractive surface at the design reference point (D) of the spectacle lens;
   a step of setting prismatic power by tilting the surface, which is on the object side or on the eyeball side, to the entire refractive surface so as to cancel prismatic power produced by the bend angle on the object side refractive surface or the eyeball side refractive surface at the design reference point (D) of the spectacle lens on the assumptions that: a line extending from the design reference point (D) to the edge of the spectacle lens in one direction is a first reference meridian (A1), wherein the direction is a projected direction in which a surface normal line at the design reference point (D) of the spectacle lens is projected on a flat plane crossing the visual axis at right angles, while the lens is arranged at the bend angle of the spectacle frame;
   a line extending from the design reference point (D) to the edge of the spectacle lens in the direction opposite to the direction of the first reference meridian is a second reference meridian (A2);
   a line crossing the first reference meridian at right angles at the design reference point (D) and extending from the design reference point to the edge of the spectacle lens in one direction is a third reference meridian (A3); and
   a line extending from the design reference point (D) to the edge of the spectacle lens in the direction opposite to the direction of the third reference meridian is a fourth reference meridian (A4), the method further includes:

      a first step of setting a plurality of reference meridians including at least the first through fourth reference meridians (A1, A2, A3, A4);
      a second step of obtaining the differences between the visual axis direction and a reference spherical surface which includes the design reference point (D) and the lens outside edge from aspherical surface coefficients (Ai), wherein the aspherical surface coefficients (Ai) are obtained from aspherical surface terms from the aspherical surface equation by providing optimized optical performance on the respective reference meridians after the first step; and

a third step of obtaining aspherical surface quantities between the reference meridians by interpolation after the second step, wherein the aspherical surface coefficients (Ai) for the respective degrees are plotted for the respective angles of the reference meridians and a curved line smoothly connecting these aspherical surface coefficients is obtained, wherein the aspherical surface coefficients (Ai) for the respective degrees at an arbitrary angle are obtained from the curved line so as to obtain the aspherical surface terms, wherein the design method further comprises:

an astigmatic power adding step on the object side refractive surface or eyeball side refractive surface of the spectacle lens that adds astigmatic power for canceling aberration caused by a pantoscopic angle of the spectacle frame at the design reference point (D) of the spectacle lens; and

a step of setting prismatic power by tilting the surface, which is on the object side or on the eyeball side to the entire refractive surface so as to cancel prismatic power produced by the pantoscopic angle on the object side refractive surface or the eyeball side refractive surface at the design reference point (D) of the spectacle lens, wherein:

a line extending from the design reference point (D) to the edge of the spectacle lens in one direction is a first reference meridian, wherein the direction is a projected direction in which a normal line at the design reference point (D) of the spectacle lens is projected on a flat plane crossing the visual axis at right angles while the lens is arranged at the bend angle and the pantoscopic angle of the spectacle frame.

2.  The design method according to claim 1, wherein:

when the spectacle lens is an astigmatic power lens,

on the assumptions that: a line extending from the design reference point (D) of the spectacle lens to the edge of the spectacle lens in one direction along the cylinder axis is a first astigmatic reference meridian (B1) ;

a line extending from the design reference point (D) to the edge of the spectacle lens in the direction opposite to the direction of the first astigmatic reference meridian is a second astigmatic reference meridian (B2);

a line crossing the first astigmatic reference meridian at right angles at the design reference point (D) and extending from the design reference point to the edge of the spectacle lens in one direction is a third astigmatic reference meridian (B3); and

a line extending from the design reference point (D) to the edge of the spectacle lens in the direction opposite to the direction of the third astigmatic reference meridian is a fourth astigmatic reference meridian (B4), the method further includes:

a first step of setting a plurality of reference meridians including at least the first through fourth reference meridians (A1, A2, A3, A4) and the first through fourth astigmatic reference meridians (B1, B2, B3, B4).

## Patentansprüche

1.  Verfahren zum Entwerfen eines Brillenglases, das in einem Brillengestell mit einem Biegewinkel von 200 Grad oder mehr montiert ist, umfassend:

einen ersten Schritt des Festlegens eines beliebigen Entwurfsreferenzpunkts (D) auf einer Brechungsfläche des Brillenglases;

einen Schritt des Hinzufügens astigmatischer Wirkung auf einer objektseitigen Brechungsfläche oder einer augapfelseitigen Brechungsfläche des Brillenglases, die der gesamten Brechungsfläche astigmatische Wirkung hinzufügt, um die Aberration aufzuheben, die durch den Biegewinkel auf der objektseitigen Brechungsfläche oder der augapfelseitigen Brechungsfläche am Entwurfsreferenzpunkt (D) des Brillenglases erzeugt wird;

einen Schritt des Einstellens prismatischer Wirkung durch Kippen der Oberfläche, die sich auf der Objektseite oder auf der Augapfelseite befindet, zur gesamten Brechungsfläche, um so die prismatische Wirkung aufzuheben, die durch den Biegewinkel auf der objektseitigen Brechungsfläche oder der augapfelseitigen Brechungsfläche am Entwurfsreferenzpunkt (D) des Brillenglases erzeugt wird, unter der Annahme, dass: eine Linie, die sich vom Entwurfsreferenzpunkt (D) zum Rand des Brillenglases in einer Richtung erstreckt, ein erster Referenzmeridian (A1) ist, wobei die Richtung eine Projektionsrichtung ist, in der eine Oberflächennormale am Entwurfsreferenzpunkt (D) des Brillenglases auf eine flache Ebene projiziert wird, die die Sichtachse in rechten Winkeln kreuzt, während das Glas im Biegewinkel des Brillengestells angeordnet ist;

eine Linie, die sich vom Entwurfsreferenzpunkt (D) zum Rand des Brillenglases in der Richtung entgegengesetzt zur Richtung des ersten Referenzmeridians erstreckt, ein zweiter Referenzmeridian (A2) ist;

eine Linie, die den ersten Referenzmeridian in rechten Winkeln am Entwurfsreferenzpunkt (D) kreuzt und sich vom Entwurfsreferenzpunkt zum Rand des Brillenglases in einer Richtung erstreckt, ein Referenzmeridian (A3) ist; und

eine Linie, die sich vom Entwurfsreferenzpunkt (D) zum Rand des Brillenglases in der Richtung entgegengesetzt zur Richtung des dritten Referenzmeridians erstreckt, ein vierter Referenzmeridian (A4) ist, wobei das Verfahren weiter einschließt:

einen ersten Schritt des Einstellens einer Vielzahl von Referenzmeridianen einschließlich mindestens des ersten bis vierten Referenzmeridians (A1, A2, A3, A4);

einen zweiten Schritt des Erlangens der Differenz zwischen der Richtung der Sichtachse und einer sphärischen Referenzoberfläche, die den Entwurfsreferenzpunkt (D) und den Glasaußenrand einschließt, aus asphärischen Oberflächenkoeffizienten (Ai), wobei die asphärischen Oberflächenkoeffizienten (Ai) aus asphärischen Oberflächentermen aus der Gleichung für die asphärische Oberfläche erlangt werden, indem eine optimierte optische Leistung auf den jeweiligen Referenzmeridianen bereitgestellt wird, nach dem ersten Schritt; und

einen dritten Schritt des Erlangens asphärischer Oberflächengrößen zwischen den Referenzmeridianen durch Interpolation nach dem zweiten Schritt, wobei die asphärischen Oberflächenkoeffizienten (Ai) für die jeweiligen Grade für die jeweiligen Winkel der Referenzmeridiane grafisch dargestellt werden und eine gekrümmte Linie, die diese asphärischen Oberflächenkoeffizienten glatt verbindet, erlangt wird, wobei die asphärischen Oberflächenkoeffizienten (Ai) für die jeweiligen Grade unter einem beliebigen Winkel anhand der gekrümmten Linie erlangt werden, um so die asphärischen Oberflächenterme zu erlangen,

wobei das Entwurfsverfahren weiter umfasst:

einen Schritt des Hinzufügens astigmatischer Wirkung auf der objektseitigen Brechungsfläche oder der augapfelseitigen Brechungsfläche des Brillenglases, der astigmatische Wirkung zur Aufhebung der Aberration hinzufügt, die durch einen pantoskopischen Winkel des Brillengestells am Entwurfsreferenzpunkt (D) des Brillenglases verursacht wird; und

einen Schritt des Einstellens prismatischer Wirkung durch Kippen der Oberfläche, die sich auf der Objektseite oder auf der Augapfelseite befindet, zur gesamten Brechungsfläche, um so die prismatische Wirkung aufzuheben, die durch den pantoskopischen Winkel auf der objektseitigen Brechungsfläche oder der augapfelseitigen Brechungsfläche am Entwurfsreferenzpunkt (D) des Brillenglases erzeugt wird, wobei:

eine Linie, die sich vom Entwurfsreferenzpunkt (D) zum Rand des Brillenglases in einer Richtung erstreckt, ein erster Referenzmeridian ist, wobei die Richtung eine Projektionsrichtung ist, in der eine Normale am Entwurfsreferenzpunkt (D) des Brillenglases auf eine flache Ebene projiziert wird, die die Sichtachse in rechten Winkeln kreuzt, während das Glas im Biegewinkel und im pantoskopischen Winkel des Brillengestells angeordnet ist.

2. Entwurfsverfahren nach Anspruch 1, wobei:

wenn das Brillenglas ein Brillenglas mit astigmatischer Wirkung ist,

unter den Annahmen, dass: eine Linie, die sich von dem Entwurfsreferenzpunkt (D) des Brillenglases zum Rand des Brillenglases in einer Richtung entlang der Zylinderachse erstreckt, ein erster astigmatischer Referenzmeridian (B1) ist;

eine Linie, die sich vom Entwurfsreferenzpunkt (D) zum Rand des Brillenglases in der Richtung entgegengesetzt zur Richtung des ersten astigmatischen Referenzmeridians erstreckt, ein zweiter astigmatischer Referenzmeridian (B2) ist;

eine Linie, die den ersten astigmatischen Referenzmeridian in rechten Winkeln am Entwurfsreferenzpunkt (D) kreuzt und sich vom Entwurfsreferenzpunkt zum Rand des Brillenglases in einer Richtung erstreckt, ein dritter astigmatischer Referenzmeridian (B3) ist; und

eine Linie, die sich vom Entwurfsreferenzpunkt (D) zum Rand des Brillenglases in der Richtung entgegengesetzt zur Richtung des dritten astigmatischen Referenzmeridians erstreckt, ein vierter astigmatischer Referenzmeridian (B4) ist, wobei das Verfahren weiter einschließt:

einen ersten Schritt des Einstellens einer Vielzahl von Referenzmeridianen einschließlich mindestens des ersten bis vierten Referenzmeridians (A1, A2, A3, A4) und des ersten bis vierten astigmatischen Referenzmeridians (B1, B2, B3, B4).

**Revendications**

1. Procédé de conception pour un verre de lunettes monté dans une monture de lunettes ayant un angle de courbure de 200 degrés ou plus, comprenant :

   une première étape d'établissement d'un point de référence de conception arbitraire (D) sur une surface réfractive du verre de lunettes ;
   une étape d'ajout de puissance astigmatique sur une surface réfractive côté objet ou une surface réfractive côté œil du verre de lunettes qui ajoute de la puissance astigmatique à l'ensemble de la surface réfractive pour annuler l'aberration produite par l'angle de courbure sur la surface réfractive côté objet ou la surface réfractive côté œil au point de référence de conception (D) du verre de lunettes ;
   une étape de réglage d'une puissance prismatique en inclinant la surface, qui est du côté objet ou du côté œil, vers l'ensemble de la surface réfractive de façon à annuler une puissance prismatique produite par l'angle de courbure sur la surface réfractive côté objet ou la surface réfractive côté œil au point de référence de conception (D) du verre de lunettes en posant que : une ligne s'étendant depuis le point de référence de conception (D) jusqu'au bord du verre de lunettes dans une direction est un premier méridien de référence (A1), dans lequel la direction est une direction projetée dans laquelle une ligne perpendiculaire à la surface au niveau du point de référence de conception (D) du verre de lunettes est projetée sur un plan horizontal croisant l'axe visuel à angles droits, tandis que le verre est agencé à l'angle de courbure de la monture de lunettes ;
   une ligne s'étendant depuis le point de référence de conception (D) jusqu'au bord du verre de lunettes dans la direction opposée à la direction du premier méridien de référence est un second méridien de référence (A2) ;
   une ligne croisant le premier méridien de référence à angles droits au niveau du point de référence de conception (D) et s'étendant depuis le point de référence de conception jusqu'au bord du verre de lunettes dans une direction est un troisième méridien de référence (A3) ; et
   une ligne s'étendant depuis le point de référence de conception (D) jusqu'au bord du verre de lunettes dans la direction opposée à la direction du troisième méridien de référence est un quatrième méridien de référence (A4), le procédé inclut en outre :

      une première étape de réglage d'une pluralité de méridiens de référence incluant au moins les premier à quatrième méridiens de référence (A1, A2, A3, A4) ;
      une deuxième étape d'obtention des différences entre la direction de l'axe visuel et une surface sphérique de référence qui inclut le point de référence de conception (D) et le bord extérieur du verre à partir de coefficients de surface asphérique (Ai), dans lequel les coefficients de surface asphérique (Ai) sont obtenus à partir de termes de surface asphérique de l'équation de surface asphérique en fournissant une performance optique optimisée sur les méridiens de référence respectifs après la première étape ; et
      une troisième étape d'obtention de quantités de surface asphérique entre les méridiens de référence par interpolation après la deuxième étape, dans laquelle les coefficients de surface asphérique (Ai) pour les degrés respectifs sont tracés pour les angles respectifs des méridiens de référence et une ligne courbe reliant progressivement ces coefficients de surface asphérique est obtenue, dans laquelle les coefficients de surface asphérique (Ai) pour les degrés respectifs à un angle arbitraire sont obtenus à partir de la ligne courbe de façon à obtenir les termes de surface asphérique,
      dans lequel le procédé de conception comprend en outre :

         une étape d'ajout de puissance astigmatique sur la surface réfractive côté objet ou la surface réfractive côté œil du verre de lunettes qui ajoute de la puissance astigmatique pour annuler l'aberration causée par un angle pantoscopique du verre de lunettes au point de référence de conception (D) du verre de lunettes ; et
         une étape de réglage d'une puissance prismatique en inclinant la surface, qui est du côté objet ou du côté œil vers l'ensemble de la surface réfractive de façon à annuler une puissance prismatique produite par l'angle pantoscopique sur la surface réfractive côté objet ou la surface réfractive côté œil au point de référence de conception (D) du verre de lunettes, dans lequel :
         une ligne s'étendant depuis le point de référence de conception (D) jusqu'au bord du verre de lunettes dans une direction est un premier méridien de référence, dans laquelle la direction est une direction projetée dans laquelle une ligne perpendiculaire au niveau du point de référence de conception (D) du verre de lunettes est projetée sur un plan horizontal croisant l'axe visuel à angles droits tandis que le verre est agencé à l'angle de courbure et l'angle pantoscopique du verre de lunettes.

2. Procédé de conception selon la revendication 1, dans lequel :

lorsque le verre de lunettes est un verre à puissance astigmatique,

en posant que : une ligne s'étendant depuis le point de référence de conception (D) du verre de lunettes jusqu'au bord du verre de lunettes dans une direction le long de l'axe du cylindre est un premier méridien de référence astigmatique (B1) ;

une ligne s'étendant depuis le point de référence de conception (D) jusqu'au bord du verre de lunettes dans la direction opposée à la direction du premier méridien de référence astigmatique est un deuxième méridien de référence astigmatique (B2) ;

une ligne croisant le premier méridien de référence astigmatique à angles droits au niveau du point de référence de conception (D) et s'étendant depuis le point de référence de conception jusqu'au bord du verre de lunettes dans une direction est un troisième méridien de référence astigmatique (B3) ; et

une ligne s'étendant depuis le point de référence de conception (D) jusqu'au bord du verre de lunettes dans la direction opposée à la direction du troisième méridien de référence astigmatique est un quatrième méridien de référence astigmatique (B4), le procédé inclut en outre

une première étape de réglage d'une pluralité de méridiens de référence incluant au moins les premier à quatrième méridiens de référence (A1, A2, A3, A4) et les premier à quatrième méridiens de référence astigmatiques (B1, B2, B3, B4).

FIG. 1A

FIG. 1B

FIG. 2A

A3
Y | UPPER

X
A2 ———————→ A1
EAR SIDE    D    NOSE SIDE

LOWER
A4

FIG. 2B

A3 Y
| UPPER

EAR SIDE
A1
A2    D    X
NOSE SIDE

LOWER
A4

FIG. 2C

A3 Y
| UPPER    B1

B3

EAR SIDE
A1
A2    D    X
NOSE SIDE

B2    LOWER    B4
A4

FIG. 3A

FIG. 3B

BEND ANGLE

FIG. 4A

FIG. 4B

INCLINATION ANGLE

HORIZONTAL LINE

OPTICAL AXIS OF
SPECTACLE LENS

VISUAL ABERRATION    VISUAL AVERAGE
                     DIOPTRIC
                     POWER DISTRIBUTION    VISUAL ABERRATION
                                           WITHOUT
                                           PRESCRIBED ASTIGMATISM

FIG. 5

VISUAL ABERRATION     VISUAL AVERAGE
DIOPTRIC
POWER DISTRIBUTION     VISUAL ABERRATION
WITHOUT
PRESCRIBED ASTIGMATISM

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005284059 A
- EP 1582909 A1
- US 20060007394 A1